# EUROPEAN PATENT SPECIFICATION

(11) **EP 2 250 692 B1**
(45) Date of publication and mention of the grant of the patent: **14.06.2017**
(21) Application number: 09720549.6
(22) Date of filing: 02.03.2009
(51) Int. Cl.: H01M 4/58, H01M 4/136, H01M 4/1397, H01M 4/62, H01M 10/052, H01M 10/39

(54) **SULFUR-CARBON MATERIAL**
SCHWEFEL-KOHLENSTOFF-MATERIAL
MATÉRIAU À BASE DE SOUFRE ET DE CARBONE

(30) Priority: 12.03.2008 US 35783
(43) Date of publication of application: 17.11.2010
(73) Proprietor: Toyota Jidosha Kabushiki Kaisha, Toyota-shi, Aichi-ken, 471-8571 (JP); UNIVERSITY OF WATERLOO, Waterloo, Ontario N2L 3G1 (CA)
(72) Inventor: NAZAR, Linda, F., Waterloo, Ontario N2V 1Z3 (CA); JI, Xiulei, Oakville, Ontario L6M 3L7 (CA); LEE, Kyu-tae, Kitchner N2G 4Z7 (CA); STAMM, Kimber, L., Ann Arbor, MI 48105 (US); RICHARD, Monique, N., Ann Arbor, MI 48103 (US)
(74) Representative: Duckworth, Timothy John
(86) International application number: PCT/US2009/035686
(87) International publication number: WO 2009/114314

(56) References cited:
- JP-A- 9 147 868
- JP-A- 2007 234 338
- KR-B1- 100 436 712
- WANG ET AL: "Sulfur-mesoporous carbon composites in conjunction with a novel ionic liquid electrolyte for lithium rechargeable batteries", CARBON, ELSEVIER, OXFORD, GB, vol. 46, no. 2, 21 November 2007 (2007-11-21), pages 229-235, XP022482991, ISSN: 0008-6223, DOI: 10.1016/J.CARBON.2007.11.007

## Description

### FIELD OF THE INVENTION

The present invention relates to a sulfur electrode, in particular to a sulfur cathode for use in a lithium-ion battery.

### BACKGROUND OF THE INVENTION

The demand for newer battery materials having higher energy density, lower toxicity, and lower material cost has led researchers and battery manufacturers to consider lithium-sulfur based systems. The lithium-sulfur chemistry offers a theoretical energy density almost ten times that achieved by current battery systems. Unfortunately, lithium-sulfur batteries have traditionally suffered from low sulfur utilization resulting in a low capacity and severe capacity fade, thereby providing a short lifetime.

Three main approaches to limit capacity loss upon cycling sulfur-based cathodes have been developed. One approach to circumvent capacity fade has been to tether sulfur within a cathode material with an organic molecular chain. This approach attempts to prevent the sulfur from migrating out of the cathode material and becoming electrochemically useless by using the organic molecular chain to attach to the sulfur and/or sulfur-containing species. Such an approach has been investigated and disclosed in U.S. Patent Nos. 4,833,048; 5,162,175; 5,516,598; 5,529,860; 5,601,947; 6,117,590; and 6,309,778. A second approach to limit the capacity fade of a lithium battery due to sulfur migration from the cathode has been to use an additive to bind polysulfides created within the battery system. This approach has been disclosed in U.S. Patents 5,532,077; 6,210,831; and 6,406,814. Materials used for this approach include carbon, silica, metal oxides, transition metal chalcogenides and metals. The third approach has been to use mixed metal chalcogenides containing sulfur as the electrochemically active material within the cathode as disclosed in U.S. Patents 6,300,009; 6,319,633; and 6,376,127. Wang et al., CARBON, vol. 46, (2008), 229-235 discloses sulfur-mesoporous carbon composites for lithium rechargeable batteries of which the carbon pores have sulfur coated thereon. However, despite numerous attempts to improve the performance of lithium batteries containing sulfur within the cathode, a significant improvement in cycle life without severely limiting capacity has remained elusive. As such, a sulfur cathode having a relatively high capacity with improved cycle life would be desirable.

### SUMMARY OF THE INVENTION

The present invention provides a material comprising: carbon and sulfur; said carbon in the form of a porous matrix having nanoporosity in the form of nanopores and nanochannels having an average diameter between 1 nanometer and 50 nanometers; and said sulfur sorbed into a portion of said nanoporosity of said carbon matrix and in the form of nanoparticles having an external dimension that is greater than the narrowest portion of said nanoporosity where said nanoparticles are located within said carbon matrix; said sulfur occupying more than 5% and less than 100% of said nanoporosity such that there is free volume available within said nanoporosity.

The invention further provides an electrode comprising the material of the invention.

The invention further provides a battery having: a negative electrode; an electrolyte; and a positive electrode comprising the material of the invention.

An electrode material having carbon and sulfur is provided. The carbon is in the form of a porous matrix having nanoporosity and the sulfur is sorbed into the nanoporosity of the carbon matrix. The carbon matrix can have a volume of nanoporosity between 10 and 99%. In addition, the sulfur occupies at least 5% and less than 100% of the nanoporosity. A portion of the carbon structure that is only partially filled with the sulfur remains vacant allowing electrolyte egress. The sulfur is sorbed into the nanoporosity using liquid transport or other mechanisms providing a material having intimate contact between the electronically conductive carbon structure and the electroactive sulfur. In addition, the sulfur can be present as sulfur and/or lithium-sulfur particles within the nanochannels or nanopores. The particles have an outer dimension that is greater than the narrowest portion of the nanochannel or nanopore such that the particle migration out of the carbon matrix is decreased compared, if not totally prevented.

### BRIEF DESCRIPTION OF THE FIGURES

Figure 1 is a schematic diagram illustrating the structure of an embodiment;
Figure 2 is a transmission electron microscopy digital image of an embodiment of the present invention;
Figure 3 is an energy dispersive spectroscopy map showing the presence of sulfur and carbon for an embodiment of the present invention;
Figure 4 is a thermogravimetric analysis plot showing sulfur mass loss from an embodiment of the present invention; and
Figure 5 is a plot showing the capacity as a function of cycle number for an embodiment of the present invention.

### DETAILED DESCRIPTION OF THE INVENTION

The present invention discloses a sulfur-carbon material for use in an electrochemical device. As such, the sulfur-carbon material has utility as an electro-active material in a battery.

The sulfur-carbon material includes a body containing carbon and sulfur. The carbon is in the form of a high surface area and porous matrix having nanoporosity. For the purposes of the present invention, nanoporosity is defined as porosity within a matrix with pores, passages, channels and the like having an average mean diameter of equal to or less than 999 nanometers. Sulfur, which can be in the form of elemental sulfur and/or a sulfur compound and both of which are referred to as "sulfur" hereafter unless otherwise noted, is sorbed into the nanoporosity of the porous matrix such that the nanoporosity is only partially filled with sulfur and can be present as discrete particles, coatings, and combinations thereof. For the purposes of the present invention, the term sorbed is defined as taken up and held. In addition, the sulfur can partially fill pores and/or passageways within the porous matrix. Only partially filling of the nanoporosity with sulfur affords for the diffusion or migration of an electrolyte through the nanoporosity to reach the sulfur. In contrast, if the nanoporosity were filled with sulfur, migration of the electrolyte to sulfur within the nanoporosity would not be possible.

The porous carbon matrix provides a tortuous and diffusion inhibiting path for any mobile species within the body. As such, during discharging of a lithium-ion battery, any mobile sulfur and/or sulfur-containing species are inhibited from diffusing and/or migrating to the anode of the battery, thereby reducing capacity loss upon the discharge/charge cycling.

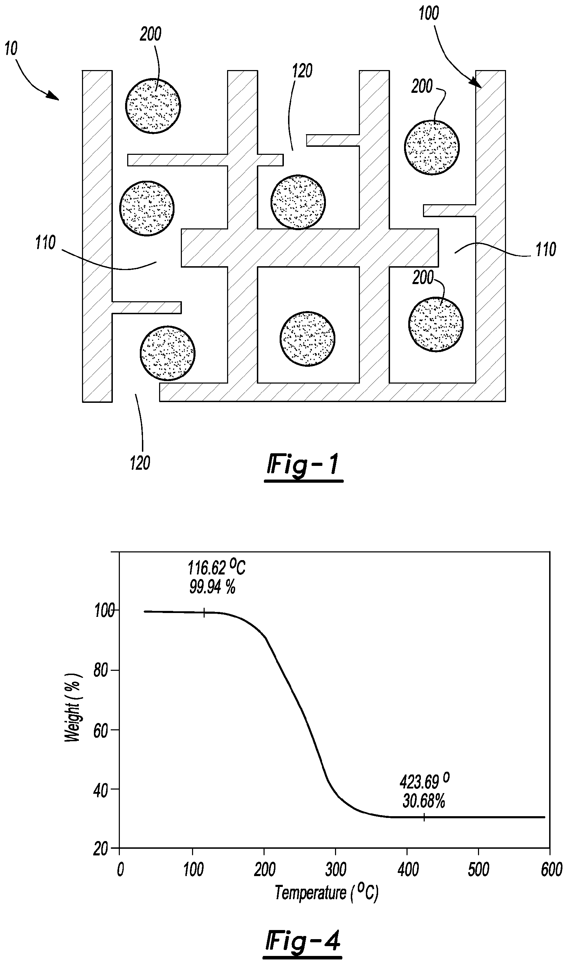

Turning now to Figure 1, an illustrative schematic representing the structure of the sulfur-carbon electrode is shown generally at reference numeral 10. The sulfur-carbon electrode 10 has a carbon matrix 100, the carbon matrix 100 having channels 110 and pores 120. The channels 110 and the pores 120 define a porosity within the carbon matrix 100. It is appreciated that the drawing in Figure 1 is two-dimensional and that the nanochannel 110 would extend into and out of the plane of the paper. In some instances, the channels 110 are nanochannels and the pores 120 are nanopores, with nanopores and nanochannels defined as pores and channels, respectively, having an average mean diameter equal to or less than 999 nanometers. Average mean diameter is defined as the average of three orthogonal diameter measurements for a pore and the average of two orthogonal diameter measurements for a channel.

The nanochannels and the nanopores have an average mean diameter between 1 nanometer and 50 nanometers. In still other instances, the nanochannels and nanopores can have an average mean diameter between 1 nanometer and 30 nanometers. In still yet other instances, the nanochannels and nanopores can have an average mean diameter between 1 nanometer and 20 nanometers. It is appreciated that the schematic shown in Figure 1 is for illustrative purposes only and that any high surface area carbon structure, such as but not limited to aerogels, xerogels, absorbants, molecular sieves, catalytic supports and the like fall within the scope of the sulfur-carbon electrode disclosed herein.

In some instances a sulfur 200 at least partially within the carbon matrix 100 can be imbibed into the void space of the carbon matrix using any liquid and/or vapor deposition method known to those skilled in the art, illustratively including liquid intrusions from a sulfur melt, solution intrusion, chemical vapor deposition (CVD) methods and physical vapor deposition (PVD) methods. In other instances, the carbon matrix 100 with the sulfur 200 at least partially therein is produced in a single step. Although illustrated in Figure 1 as discrete particles, this is not required. However, if the sulfur 200 is present as an elemental sulfur particle, the elemental sulfur particle can have an outer or external dimension that is greater than a minimal diameter or narrowest portion of the nanoporosity where the elemental sulfur particle is located. The sulfur 200 can also be present within the carbon matrix 100 as a sulfur compound, for example a lithium-sulfur compound. If the sulfur compound is in the form of a particle, the sulfur compound particle can also have an outer or external dimension that is greater than a minimal diameter or narrowest portion of the nanoporosity where the sulfur compound particle. In this manner, in addition to the tortuous path that the sulfur must pass in order to migrate out of the carbon matrix 100, the physical size of elemental sulfur and/or sulfur compound particles is such that migration of the particles out of the carbon matrix is decreased compared to heretofor materials, if not totally prevented.

The sulfur can be present as a coating within the channels 110 and/or pores 120, and/or the sulfur 200 can partially fill the channels 110 and/or pores 120. The sulfur 200 partially fills the channels 110 and/or pores 120 between 5% and less than 100%. In other instances, the sulfur 200 partially fills the channels 110 and/or pores 120 between 50% and less than 100%, while in still yet other instances between 75% and less than 100%. In yet even other instances, the sulfur 200 partially fills the channels 110 and/or pores 120 between 90% and less than 100%. It is appreciated that the remaining volume, also known as free volume, of the channels 110 and/or pores 120 that is not filled with sulfur can be vacant and allow for electrolyte penetration. Stated differently, after the sulfur 200 partially fills the nanoporosity of the carbon matrix 100, there is free volume available within the channels 110 and pores 120. It is also appreciated that the amount of the sulfur 200 that is present as part of the sulfur-carbon electrode 10 can be varied by the degree or extent of liquid or vapor deposition of the sulfur 200.

Not being bound by theory, incorporation of the sulfur into the void space of the carbon matrix 100 results in a tortuous path that must be traversed before any sulfur and/or sulfur-containing species incorporated within the sulfur-carbon electrode 10 can exit the carbon matrix 100. In the alternative, the carbon matrix 100 provides channels 110 and/or pores 120 having dimensions that prohibit the sulfur 200 and/or sulfur-containing species from exiting. For example, a sulfur 200 particle can be deposited through a pore 120 and within a channel 110 with the resultant particle having a diameter that is too large to exit the channel 110 and/or pore 120. Or for another example, during the discharging of a lithium-type battery the sulfur 200 reacts with lithium to form Li*ₓ*S*_{y}* and the resultant sulfur-containing species has a diameter or outer physical dimension that is too large to exit the channel 110 and/or pore 120. In addition to providing a tortuous and/or physically difficult path to traverse, the carbon structure 100 provides electronic conductivity necessary when using an insulating species such as sulfur, and remains in close contact with the electrochemically active sulfur.

As will be clear to those skilled in the art, mixing of the sulfur and carbon can be accomplished using a variety of methods, including, but not limited to, ball milling, grinding, melting, evaporation, and/or vacuum treatment. The density of carbon is relatively low such that the addition of up to 30 wt% of carbon to an electrode can still provide useful energy for a battery, as shown in the table below wherein the theoretical energy density for a battery containing LiCoO₂ as the active material is compared to a battery having sulfur as the active material with different amounts of carbon added thereto.

**Table**

| **Active Material** | **Active Material (wt%)** | **Binder (wt%)** | **Carbon (wt%)** | **Theoretical energy density (Wh/kg)** |
|---|---|---|---|---|
| LiCoO₂ | 85 | 5 | 10 | 326 |
| S (100% utilization) | 85 | 5 | 10 | 1205 |
| S (100% utilization) | 65 | 5 | 30 | 921 |
| S (50% utilization) | 65 | 5 | 30 | 543 |
| S (45% utilization) | 50 | 5 | 45 | 418 |

In order to better explain by way of illustration and not by way of limitation, an example of a sulfur-carbon electrode within the scope of the present invention is provided below.

### Example

A carbon matrix was prepared as detailed by Jun et al. (J. Am. Chem. Soc. 2000, 122, 10712). Thereafter, a powder containing 30 wt% of the carbon matrix material and 70 wt% of elemental sulfur was hand ground and pressed into pellet form. The pellet was then heated between 120 and 180°C, for example 155°C, such that the sulfur flowed into the void space within the carbon matrix. The carbon-sulfur composite was hand ground and used without further preparation as battery active material. A comparison electrode was prepared using a slurry containing 23 weight percent (wt%) sulfur powder, 10 wt% conductive carbon, 20 wt% binder solution and 46 wt% solvent. The slurry was cast onto an aluminum current collector using the doctor blade method, dried under vacuum and assembled into cells.

Batteries were fabricated using methods known to those skilled in the art and tested in a typical constant current profile.

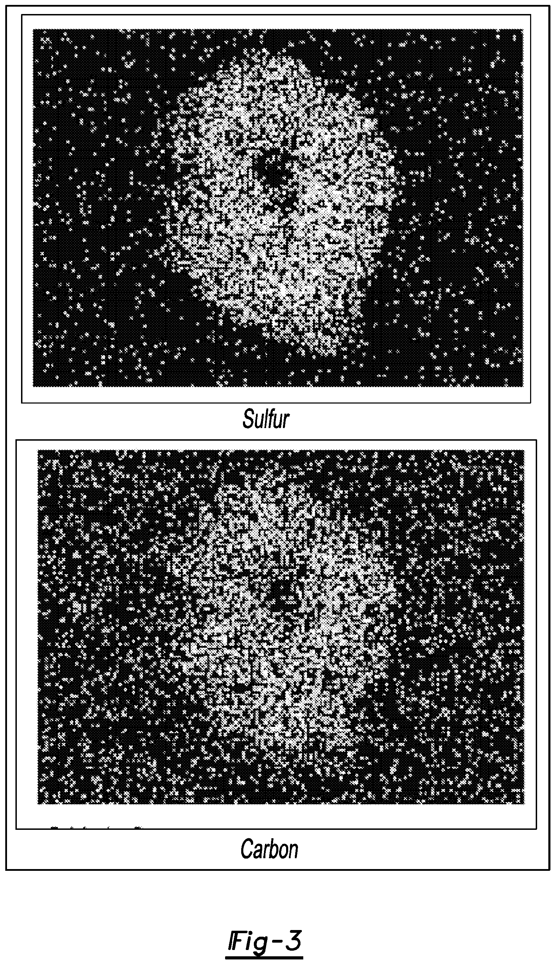

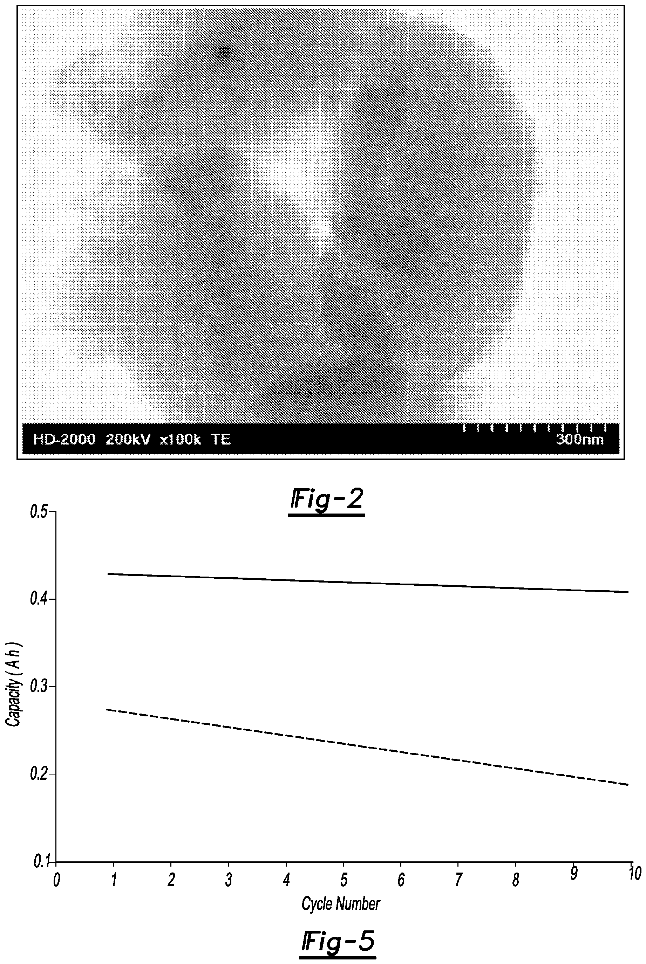

Figure 2 shows a transmission electron microscopy (TEM) micrograph of a portion of the sulfur-carbon electrode material. As illustrated in this micrograph, sulfur containing nanochannels visible as generally parallel lines of darker intensity than the surrounding material can be seen at various locations. Figure 3 illustrates an energy dispersive spectroscopy (EDS) mapping of the material shown in Figure 2, wherein the presence of sulfur within the carbon matrix is shown. As illustrated in this figure, the sulfur is occupying void space within the carbon structure.

After production of the sulfur-carbon electrode material, thermogravimetric analysis (TGA) was performed, with the results shown in Figure 4. As illustrated in this figure, approximately 70 wt% of the material can be attributed to sulfur.

The sulfur-carbon material illustrated in Figures 2 and 3 was also tested against the comparison electrode mentioned above. The results of this testing are shown in Figure 5 where the high capacity as a function of cycle number for the sulfur-carbon electrode material disclosed herein is demonstrated by the solid line when compared with the comparison electrode shown by the dotted line. In particular, the capacity of the sulfur-carbon material shown in Figures 2 and 3 has a higher initial capacity than the comparison electrode, with the higher capacity maintained throughout the test cycles. As such, the sulfur-carbon material produced by depositing sulfur within the void space of a porous and high surface area carbon matrix provides increased capacity and reduced capacity loss as a function of cycles compared to the comparison electrode.

## Claims

1. A material comprising:
carbon and sulfur;
said carbon in the form of a porous matrix having nanoporosity in the form of nanopores and nanochannels having an average diameter between 1 nanometer and 50 nanometers; and
said sulfur sorbed into a portion of said nanoporosity of said carbon matrix and in the form of nanoparticles having an external dimension that is greater than the narrowest portion of said nanoporosity where said nanoparticles are located within said carbon matrix;
said sulfur occupying more than 5% and less than 100% of said nanoporosity such that there is free volume available within said nanoporosity.

2. The material of claim 1, wherein said matrix has between 10 and 99 % by volume of said nanoporosity.

3. The material of claim 1 or 2, wherein said sulfur occupies more than 50% and less than 100% said nanoporosity.

4. The material of claim 3, wherein said sulfur occupies more than 75% and less than 100% said nanoporosity.

5. The material according to any one of the preceding claims, which further comprises a coating of sulfur.

6. The material of any one of the preceding claims, wherein at least part of said sulfur is an elemental sulfur particle.

7. The material of any one of the preceding claims, wherein at least part of said sulfur compound is a sulfur compound particle.

8. The material of any one of the preceding claims, wherein said nanopores and said nanochannels have an average diameter between 1 nanometer and 30 nanometers.

9. The material of claim 8, wherein said nanopores and said nanochannels have an average diameter between 1 nanometer and 20 nanometers.

10. An electrode comprising the material according to any one of the preceding claims.

11. The electrode of claim 10, further comprising a binding compound, other additives and combinations thereof.

12. A battery having:
a negative electrode;
an electrolyte; and
a positive electrode according to claim 10 or 11.

## Patentansprüche

1. Material, umfassend:
Kohlenstoff und Schwefel;
wobei der Kohlenstoff in Form einer porösen Matrix eine Nanoporösität in Form von Nanoporen und Nanokanälen mit einem durchschnittlichen Durchmesser zwischen 1 Nanometer und 50 Nanometern hat; und
wobei der Schwefel, der in einen Abschnitt der Nanoporösität der Kohlenstoffmatrix sorbiert wird und die Form von Nanopartikeln annimmt, die äußere Abmessung aufweisen, die größer ist als der engste Abschnitt der Nanoporösität, wo die Nanopartikel in der Kohlenstoffmatrix positioniert sind;
wobei der Schwefel mehr als 5 % und weniger als 100 % der Nanoporösität einnimmt, sodass freies Volumen in der Nanoporösität verfügbar ist.

2. Material nach Anspruch 1, wobei die Matrix zwischen 10 und 99 Vol.-% der Nanoporösität aufweist.

3. Material nach Anspruch 1 oder 2, wobei der Schwefel mehr als 50 % und weniger als 100 % der Nanoporösität einnimmt.

4. Material nach Anspruch 3, wobei der Schwefel mehr als 75 % und weniger als 100 % der Nanoporösität einnimmt.

5. Material nach einem der vorstehenden Ansprüche, ferner umfassend einen Überzug aus Schwefel.

6. Material nach einem der vorstehenden Ansprüche, wobei mindestens ein Teil des Schwefels ein elementares Schwefelpartikel ist.

7. Material nach einem der vorstehenden Ansprüche, wobei mindestens ein Teil der Schwefelverbindung ein Schwefelverbindungspartikel ist.

8. Material nach einem der vorstehenden Ansprüche, wobei die Nanoporen und Nanokanäle einen durchschnittlichen Durchmesser zwischen 1 Nanometer und 30 Nanometern haben.

9. Material nach Anspruch 8, wobei die Nanoporen und Nanokanäle einen durchschnittlichen Durchmesser zwischen 1 Nanometer und 20 Nanometern haben.

10. Elektrode, umfassend das Material nach einem der vorstehenden Ansprüche.

11. Elektrode nach Anspruch 10, ferner umfassend eine bindende Verbindung, andere Additive und Kombinationen davon.

12. Batterie mit:
einer negativen Elektrode;
einem Elektrolyt; und
einer positiven Elektrode nach Anspruch 10 oder 11.

## Revendications

1. Matériau comprenant :
du carbone et du soufre ;
ledit carbone sous forme de matrice poreuse ayant une nanoporosité sous forme de nanopores et de nanocanaux ayant un diamètre moyen compris entre 1 nanomètre et 50 nanomètres ; et
ledit soufre sorbé dans une partie de ladite nanoporosité de ladite matrice de carbone et sous forme de nanoparticules ayant une dimension externe qui est supérieure à la partie la plus étroite de ladite nanoporosité où lesdites nanoparticules sont situées à l'intérieur de ladite matrice de carbone ;
ledit soufre occupant plus de 5 % et moins de 100 % de ladite nanoporosité de manière à ce qu'il y ait un volume libre disponible à l'intérieur de ladite nanoporosité.

2. Matériau selon la revendication 1, dans lequel ladite matrice a entre 10 et 99 % en volume de ladite nanoporosité.

3. Matériau selon la revendication 1 ou 2, dans lequel ledit soufre occupe plus de 50 % et moins de 100 % de ladite nanoporosité.

4. Matériau selon la revendication 3, dans lequel ledit soufre occupe plus de 75 % et moins de 100 % de ladite nanoporosité.

5. Matériau selon l'une quelconque des revendications précédentes, qui comprend en outre un revêtement de soufre.

6. Matériau selon l'une quelconque des revendications précédentes, dans lequel au moins une partie dudit soufre est une particule de soufre élémentaire.

7. Matériau selon l'une quelconque des revendications précédentes, dans lequel au moins une partie dudit composé de soufre est une particule de composé de soufre.

8. Matériau selon l'une quelconque des revendications précédentes, dans lequel lesdits nanopores et lesdits nanocanaux ont un diamètre moyen compris entre 1 nanomètre et 30 nanomètres.

9. Matériau selon la revendication 8, dans lequel lesdits nanopores et lesdits nanocanaux ont un diamètre moyen compris entre 1 nanomètre et 20 nanomètres.

10. Électrode comprenant le matériau selon l'une quelconque des revendications précédentes.

11. Électrode selon la revendication 10, comprenant en outre un composé de liaison, d'autres additifs et des combinaisons de ceux-ci.

12. Batterie ayant :
une électrode négative ;
un électrolyte ; et
une électrode positive selon la revendication 10 ou 11.
